# EUROPÄISCHE PATENTSCHRIFT

(11) **EP 1 998 625 B1**
(45) Veröffentlichungstag und Bekanntmachung des Hinweises auf die Patenterteilung: **01.06.2016**
(21) Anmeldenummer: 07727417.3
(22) Anmeldetag: 27.03.2007
(51) Int. Cl.: A23C 11/10, A23J 1/14, A23L 11/30

(54) **VERFAHREN ZUR HERSTELLUNG EINER SOJAMILCH**
METHOD FOR PRODUCING A SOY MILK
PROCÉDÉ DE PRODUCTION D'UN LAIT DE SOJA

(30) Priorität: 29.03.2006 DE 102006014781
(43) Veröffentlichungstag der Anmeldung: 10.12.2008
(73) Patentinhaber: GEA Mechanical Equipment GmbH, 59302 Oelde (DE)
(72) Erfinder: HERRMANN, Martin, 31515 Wunsdorf (DE)
(74) Vertreter: Specht, Peter
(86) Internationale Anmeldenummer: PCT/EP2007/052944
(87) Internationale Veröffentlichungsnummer: WO 2007/113176

(56) Entgegenhaltungen:
- EP-A2- 0 883 997
- US-A- 3 728 327
- US-A1- 2006 062 890
- PRABHAKARAN ET AL: "Effect of extraction methods and UHT treatment conditions on the level of isoflavones during soymilk manufacture" FOOD CHEMISTRY, ELSEVIER SCIENCE PUBLISHERS LTD, GB, Bd. 99, Nr. 2, 2006, Seiten 231-237, XP005424634 ISSN: 0308-8146
- DATABASE WPI Week 198502 Derwent Publications Ltd., London, GB; AN 1985-008793 XP002442993 & JP 59 205957 A (MEIJI MILK PROD CO LTD) 21. November 1984 (1984-11-21)

## Beschreibung

Die Erfindung betrifft ein Verfahren zur Herstellung einer Sojamilch.

Die Erfindung betrifft insbesondere ein Verfahren zur Herstellung einer Sojamilch, bei dem unter qualitativen organoleptischen Gesichtspunkten ein besseres Produkt erzeugt wird und/oder ein Produkt, das eine verbesserte Ausbeute hinsichtlich des Eiweißgehaltes der Sojabohnen beinhaltet. Ferner können mit diesem Verfahren native Proteine gewonnen werden, die sich bei der Weiterverarbeitung zu Tofu und anderen eiweißhaltigen Produkten positiv auswirken.

Zum technologischen Hintergrund sei zunächst auf folgende Literatur verwiesen: Tofu & Soymilk Production, 2. edition, Shurtleff&Aoyagi, ISBN 0-933332-14-9 (C) (1984); Handbuch der Milch- und Molkereitechnik, 2. Auflage, Herrmann et al. ISBN 3-7862-9071 -8 (2000); Lebensmittel- und Bioverfahrenstechnik-Molkereitechnologie, Kessler H.G, Verlag A. Kessler, Postfach 1538, D-8050 Freising (1988) und Industrieprojekt GEA Wiegand GmbH, D-76275 Ettlingen, Eindampftechnik (2005).

Ein gattungsgemäßes Verfahren ist aus SHURTLEFF W. u.a.: The Book Of Tofu (1984) Kapitel 5: Principles of Tofu & Soymilk Production, S. 115-131 bekannt. Bei diesem Verfahren werden Sojabohnen zunächst für einige Stunden-vorzugsweise mehr als sechs Stunden - mit Wasser, das vorzugsweise ungefähr die Temperatur der Umgebungsluft hat (bzw. im Sommer etwas kühler und im Winter etwas wärmer ist) eingeweicht und vermahlen. Der durch kalte Extraktion erzielte Sojabrei wird in Sojamilch und Okara getrennt. Nach dieser Trennung wird die Sojamilch erhitzt. In der Schrift wird auch beschrieben, dass bei Einsatz von Wasser mit einer höheren Temperatur von z.B. 55° C die Einweichzeit nur 1 bis 2 Stunden betragen kann.

Die FR 2 578 396 schlägt vor, Sojabohnen für 6 bis 12 Stunden in Wasser mit einer Temperatur von 15°C bis 30°C einzuweichen, sie zu mahlen und in zwei Phasen zu trennen.

Die US 2006/0062890 A1 schlägt vor, Sojabohnen in entgastem Wasser bei 4° C einzuweichen, sie zu mahlen und dann durch Filtration eine Trennung des Breis in Okara und Wasser vorzunehmen.

In der US 3 728 327 werden die Sojabohnen eingeweicht, homogenisiert und dann in einer Zentrifuge in Sojamilch und Okara getrennt. Das in der Sojamilch enthaltene Protein wird durch Umkehrosmose weiter konzentriert.

Zum Stand der Technik wird ferner die EP 0 883 997 A1 genannt, in der Sojabohnen zur Gewinnung nativen Proteins in 5° warmen Wasser für 20 Stunden eingeweicht und dann einem Trennschritt zum Abtrennen der Sojamilch unterzogen werden. Die Sojamilch ist nicht zum Verzehr sondern zur Weiterverarbeitung zur Gewinnung verschiedener Wertprodukte bestimmt.

Aus dem asiatischen Raum ist zudem die Herstellung einer Milch aus Sojabohnen zur Produktion eines trinkbaren Produktes (Sojamilch) und für die Verarbeitung der Sojamilch zu Tofu, Konzentraten, Isolaten und ähnlichen Produkten bekannt, das folgende Verfahrenswege nutzt: Die Sojabohnen werden über einen Zeitraum von 16-24 Stunden mit kaltem Wasser, bei Temperaturen um 25 - 20 °C eingeweicht. Sodann wird das Einweichwasser verworfen und anschließend unter Zugabe von Wasser feinst vermahlen. Diese Sojamaische wird auf Temperaturen von 90 bis 95°C erhitzt, unterschiedlich lang bei dieser Temperatur heiß gehalten und über eine Siebfläche in Sojamilch und in eine feste Masse (Okara) getrennt. Die Sojamilch wird für die menschliche Ernähung als Getränk oder zur Weiterverarbeitung zu Tofu verwendet. Okara ist ein Abfallprodukt für die Tierernährung.

Es sind auch Verfahren bekannt, bei denen nach der Kalteinweichung der Bohnen bis zu 24 Stunden diese bei Temperaturen von 20 - 30 °C vermahlen werden. Danach erfolgt eine Erhitzung auf etwa 95 °C, um das Enzym Lipoxydase zu inaktivieren. Dieses Enzym ist für die Ausbildung eines unerwünschten Bohnengeschmacks verantwortlich. Weiterhin ist eine Erhitzung für die Inaktivierung der Trypsininhibitoren erforderlich.

In der letzten Zeit sind Verfahren entwickelt worden, die einen kontinuierlichen Prozess ermöglichen und eine höhere Eiweißausbeute als die traditionellen Verfahren beinhalten. Insbesondere sind hierbei die Verfahren "Vita Soy, Bühler und Cornell" zu erwähnen.

Eine dem aktuellen Stand der Technik angepasste Verfahrensbeschreibung kann wie folgt aussehen:

Sojabohnen werden bei etwa 90°C bis 95 °C 5-15 Minuten mit Wasser behandelt, wobei auf diese Einweichzeit auch teilweise verzichtet werden kann. Danach erfolgt eine Heißvermahlung. Nach einem 2-stufigen Vermahlungsprozess erfolgen eine Erhitzung zur Inaktivierung der Enzyme (Lipoxydase und Trypsininhibitoren) und anschließend eine Trennung mittels eines Dekanters bei Temperaturen zwischen 80 und 90°C. Das anfallende Okara wird wiederum mit Heißwasser vermischt. Anschließend erfolgt eine 2. Dekantierung bei diesen Temperaturen zur Ausbeuteverbesserung. Danach wird die nach der 2. Dekantierung anfallende Sojamilch mit der von dem 1. Dekanter anfallenden Sojamilch vermischt und einer Desodorierung zugeführt. Diese Desodorierung beinhaltet eine Erhitzung auf Temperaturen von 95-145°C mit einer anschließenden schlagartigen Entspannung in Unterdruckbehältern. Hierbei werden unerwünschte Geschmacksstoffe eliminiert, für deren Bildung die Lipoxydase verantwortlich ist, wobei gleichzeitig auch die Trypsin-Inhibitoren zum Teil inaktiviert werden können. Diese Erhitzung kann auch vor dem Dekantieren erfolgen. Danach wird das Produkt heiß bzw. kalt vorgestapelt, um es anschließend über ein UHT-Erhitzungssystem steril abzufüllen oder zur Tofuherstellung zu verwenden.

Grundsätzlich ist bei diesen Verfahren zu bemerken, dass bei den bekannten Verfahren zur Herstellung einer Sojamilch eine Denaturierung der nativen Proteine (Eiweiß) erfolgt und über den genannten Desodorierungsschritt nicht eine optimale Reduzierung des Bohnengeschmackes erreicht wird.

Zur Ausbeute-Verbesserung wird hierbei während des Mahlprozesses der pH-Wert der Lösung über pH 7,0 - vorwiegend mit Natriumhydrogenkarbonat-angehoben, wodurch die Löslichkeit der Proteine verbessert wird. Vorwiegend, aus gesundheitlichen Gründen erfolgt anschließend im Lagertank eine pH-Wert-Einstellung unter pH 7,0 mit einer organischen Säure, wobei bedingt durch die Säurezugabe eine örtliche Übersäuerung des Produktes mit dem Ergebnis einer Teilausfällung von Proteinen erfolgt.

Vor diesem Hintergrund ist es die Aufgabe der Erfindung, das gattungsgemäße Verfahren derart weiter zu entwickeln, dass unter Beibehaltung eines kontinuierlichen Prozesses auf einfachste Weise eine optimale Sojamilch-bzw. ein Getränk aus Soja bzw. auf Sojabasis-erhalten wird, die auch für die Weiterverarbeitung zu Sojaprodukten verbesserte Eigenschaften aufweist.

Die Erfindung löst diese Aufgabe durch den Gegenstand des Anspruches 1.

Vorteilhafte Ausgestaltungen, mit denen auch weitere Teilaufgaben gelöst werden, sind den Unteransprüchen und den nebengeordneten Ansprüchen zu entnehmen.

Nach Anspruch 1 schafft die Erfindung ein Verfahren zur Herstellung einer Sojamilch bzw. eines Getränkes auf Sojabasis, wobei dieses Produkt durch folgende Verfahrensschritte erhalten wird:
a) Einweichen der Sojabohnen und
b) Vermahlen der Sojabohnen zu einem Brei,
c) Trennung des Sojabreis in Sojamilch und Okara im Zentrifugalfeld,
d) Durchführung der Schritte a) und b) und vorzugsweise c) bei Temperaturen von 0 °C bis 40 °C, die zur Gewinnung nativer Proteine geeignet sind;
e) woraufhin die Sojamilch einer Desodorierung unterzogen wird, um den Bohnengeschmack zu verringern.

Nach Anspruch 2 und 3 werden die Sojabohnen in den Schritten a) und b) vorzugsweise bei Temperaturen von 2° C bis 40° C, insbesondere 2 bis 20° C eingeweicht und vermahlen.

Es ist zweckmäßig, dass die Sojabohnen im Schritt a) über ein kontinuierliches Verfahren eingeweicht werden.

Vorzugsweise werden die Sojabohnen in den Schritten a) und b) mit entgastem Wasser und/oder Eiswasser eingeweicht und vermahlen.

Es ist ferner zweckmäßig, wenn die Sojabohnen über einen Zeitraum von weniger als 60 min, vorzugsweise über einen Zeitraum von weniger als 30 min, eingeweicht werden.

Das gewonnene Okara kann mit Wasser und/oder mit Sojamilch vermischt werden. Das mit Wasser und oder mit Sojamilch vermischte Okara kann ferner einer weiteren intensiven Vermischung unterzogen werden.

Vorzugsweise erfolgt die intensive Vermischung mit einer Kolloidmühle oder einem Emulsifier.

Es ist besonders vorteilhaft, wenn die Trennung des Sojabreis in Sojamilch und Okara im Zentrifugalfeld, insbesondere mit einem Separator und/oder einer Vollmantel-Schneckenzentrifuge erfolgt.

Bevorzugt werden bei dem gesamten Verfahren bis zur Desodorierung zur Herstellung einer Sojamilch Temperaturen unter 90 °C, insbesondere unter 70°C, vorzugsweise unter 40°C eingehalten.

Besonders bevorzugt erfolgt die Desodorierung mittels eines thermischen Verfahrens, insbesondere derart, dass der Bohnengeschmack vermindert wird, wobei unter atmosphärischem Druck Temperaturen von 98° C bis 103° C eingehalten werden.

Besonders bevorzugt erfolgt die Desodorierung ferner mittels eines Eindampfverfahrens.

Weiter bevorzugt erfolgt die Desodorierung mittels einer Entaromatisierungsanlage.

Nach einer weiteren bevorzugten Variante erfolgt eine Erhitzung vor der Desodorierung mittels Direktdampf, insbesondere mit lebensmittelgeeignetem Direktdampf.

Nach einer weiteren bevorzugten Variante erfolgt vor der Erhitzung mit Direktdampf eine Vorerhitzung über einen Wärmeaustauscher.

Besonders bevorzugt erfolgt die Vorerhitzung bis auf 45° C, vorzugsweise bis auf 50 °C erfolgt.

Nach einer weiteren Variante erfolgt die Erhitzung der Sojamilch mit Direktdampf über einen Zeitraum von weniger als 180 sec, vorzugsweise weniger als 120 sec und ganz besonders bevorzugt weniger als 60 sec.

Besonders bevorzugt erfolgt die Erhitzung der Sojamilch mit Direktdampf bis auf eine Temperatur von max. 110° bis 140°C, vorzugsweise bis auf 110°C bis 130°C und ganz besonders bevorzugt bis auf 120 °C bis 125°C.

Bevorzugt erfolgt die Desodorierung ferner mittels eines Eindampfverfahrens, bei dem die Dampfvolumina wenigstens 1,5 kg Dampf / kg Produkt betragen.
Es ist zweckmäßig, dass bei der Desodorierung zunächst eine Erhitzung nach Anspruch 22 und dann ein Abkühlen bis vorzugsweise auf 85° C erfolgt.

Es ist ferner vorteilhaft, wenn bei der Desodorierung eine Entspannung im Verdampfersystem bis auf 45°C, vorzugsweise bis auf 40 °C erfolgt.

Nach einer weiteren Variante erfolgt die Entspannung in einem Fallstromverdampfer.

Nach einer weiteren Variante erfolgt bei der Entspannung von der höheren Temperatur auf die niedrige Temperatur eine Verneblung durch einen brauseähnlichen Eintragskopf in ein Unterdruckbehältnis, wobei das zu entgasende Produkt vorzugsweise nicht oder im wesentlichen nicht mit Kontaktflächen in Berührung kommt.

Es ist ferner zweckmäßig, wenn die Sojamilch einer UHT-(Ultrahochtemperatur)-Erhitzung unterzogen, bei der sie im nicht aseptischen Bereich homogenisiert wird.

Vorzugsweise wird bei der UHT-(Ultrahochtemperatur)-Erhitzung bei Drücken von mehr als 200bar und bei einer anschließenden direkten UHT-Erhitzung ein Kavitationseffekt erzielt, der zu einer Zerkleinerung von Fettkügelchen führt.

Es ist denkbar, dass eine ein- oder zweistufige Homogenisierung erfolgt.

Es ist ferner vorteilhaft, wenn die gewonnene Sojamilch mittels eines Sprühturmes bei Produkttemperaturen unterhalb der Denaturierung von Sojaproteinen getrocknet wird.

Vorzugsweise finden bei der Sprühtrocknung Produkttemperaturen unter 80 °C Anwendung.

Zwar sind ein Kalteinweichen oder ein Desodorieren an sich bekannt. Nicht erkannt wurde aber bisher die besonders vorteilhafte Kombination aus einem Einweichen mit kaltem Wasser des angegebenen Temperaturbereichs, vorzugsweise über nur einen kurzen Zeitraum, der nachfolgenden Trennung in Sojamilch und Okara und der Desodorierung, vorzugsweise unter den Randbedingungen der Unteransprüche, wodurch zugleich eine deutliche Reduzierung des Bohnengeschmackes als auch ein guter Einweißgehalt in der Sojamilch erreicht wird. Unter Sojamilch wird ein Getränk auf Sojabasis bezeichnet, das im englischen Sprachkreis in der Regel als "Soymilk" bezeichnet wird.

Über ein spezielles Entaromatisierungsverfahren, vorzugsweise mittels eines Fallstromverdampfers, werden unerwünschte Geruchs- und Geschmacksstoffe eliminiert.

Es werden zudem durch die gewählten Verfahrensschritte/-temperaturen native Proteine gewinnbar, die sich bei der Weiterverarbeitung zu Tofu und anderen eiweißhaltigen Produkten eignen. Ergänzend ist als positiv zu vermerken, dass die erfindungsgemäß hergestellte Sojamilch einen erheblich reduzierten Bohnengeschmack (der in manchen Regionen unerwünscht ist) aufweist.

Nach einer Variante des erfindungsgemäßen Verfahrens ist es möglich, über Ultrafiltration oder andere Trennverfahren natives Eiweiß zu produzieren, wobei eine optimierte Technologie zur Herstellung von Soja-Eiweiß Konzentraten und/oder- Isolaten und weiteren Eiweißprodukten möglich ist.

Mit dem Verfahren kann auch ein Sojapulver mit einem hohen Anteil an nicht denaturiertem Eiweiß erzielt werden. Hierbei wird beispielsweise bei einer Sprühtrocknung im Temperaturbereich von 180 - 200 °C Trocknungstemperatur eine Produkttemperatur 70 bis 80 °C erzielt, bei der die vorliegenden nativen Proteine nicht denaturiert werden. Über diesen Weg kann ein Low Heat Sojapulver bzw. ein Medium Heat Sojapulver mit spezifischen funktionellen Eigenschaften gewonnen werden. In Abhängigkeit von der Produkterhitzung erfolgt hierbei eine geringfügige (Low-Heat) bzw. eine mittlere Denaturierung der Proteine von 40-60 % (Medium-Heat)

Für die Haltbarkeitsverlängerung der Sojamilch kann diese mit einem direkten UHT-Erhitzungsverfahren thermisch behandelt werden. Vorzugsweise wird hierbei eine direkte UHT - Erhitzungsanlage eingesetzt, bei der auf der Basis der Zerkleinerung der Fettkügelchen eine Homogenisierung im aseptischen Bereich erfolgt.

Diese Anlagenkonzeption wurde von der Molkereiindustrie zur Sterilisierung von Konsummilch übernommen. Mit diesem Verfahrensschritt wird neben der Sterilisation erreicht, dass eine Aufrahmung des Milchfettes zeitlich stark verzögert auftritt. Bei dieser Zerkleinerung werden die Milchfettkügelchen von einem mittleren Durchmesser von ca. 20 µm auf einen mittleren Durchmesser von 1-3 µm zerkleinert. Eine weitere Zerkleinerung erfolgt nicht, da sonst das Fett ausölt, was eine ölhaltige Schicht auf der Kuh - Konsummilch ergeben würde. Bei diesem Verfahren werden Drücke bis zu 200 bar eingesetzt, wobei eine zweistufige Homogenisierung in der Molkereiindustrie erfolgt, zuerst bei etwa 200 bar und danach bei einem 1/3 bis 1/4 des vorgenannten Hauptdruckes.

Diese zweistufige Homogenisierung ist vorteilhaft, da bei einer einstufigen Homogenisierung bei z.B.200 bar in der derart behandelten und abgefüllten Konsummilch eine Agglomeratbildung der Milchfettkügelchen erfolgt. Diese Agglomerate können eine Größenordnung bis zu 400 µm erreichen. Bei dieser Größenordnung würde das Fett der Milch sehr stark aufrahmen und eine Fettschicht in der Konsummilch ergeben. Bei einer zweistufigen Homogenisierung in der Molkereiindustrie bei einer nachgeschalteten Homogenisierstufe von etwa 70 bar werden diese Agglomerate zerschlagen, so dass diese verminderte Aufrahmung erreicht wird. Ein Ausölen des Produktes ist hierbei nicht gegeben.

Bei einer sterilisierten Sojamilch besteht das Problem bei den Fettkügelchen ebenfalls darin, dass diese während der Lagerung zur Aufrahmung neigen. Ersichtlich ist dieses daran, dass in Abhängigkeit von der Lagerzeit sich an der Oberfläche der abgefüllten, sterilisierten Sojamilch Fettflocken (Fett- Eiweißagglomerate) zeigen, die unerwünscht sind.

Zu berücksichtigen ist bei diesem Verfahren, dass bei der direkten Erhitzung Dampf in das Produkt injiziert wird. Hierdurch wird ein Kavitationseffekt erzielt, der einer Homogenisierung von etwa 70 bar entspricht. Das Verfahren der direkten UHT Erhitzung in der Molkereiindustrie beinhaltet zuerst die Dampfinjektion, danach die Entspannung mit einer sich anschließenden zweistufigen Homogenisierung bei den vorgenannten Drücken. Würde bei der direkten UHT Behandlung von Milch die Homogenisierung vor der Erhitzung erfolgen, wäre eine Überstrapazierung der Fettkügelchen die Folge mit dem Ergebnis des Ausölens. Dabei ist zu beachten, dass die Homogenisierung nach der UHT - Behandlung bei der Kuh-Konsummilch im sterilen Bereich erfolgen muss. Dadurch ist eine aseptisch ausgelegte Homogenisieranlage erforderlich, deren sterile Arbeitsweise immer gewährleistet sein muss.

Bei der Behandlung von Sojamilch hat sich bei unseren Versuchen herausgestellt, dass die Zerkleinerung der Fettkügelchen vor einer direkten UHT Erhitzung durch eine zweistufige Homogenisierung vorteilhaft ist. Hierdurch werden die bereits zerkleinerten Fettkügelchen durch den Kavitationseffekt der direkten UHT Erhitzung noch weiter zerkleinert, wobei jedoch im Gegensatz zur Kuh - Konsummilch kein Ausöleffekt ersichtlich war und die vorgenannte Fettflockenbildung nicht beobachtet werden konnte.

Der weitere Vorteil dieses Verfahrens besteht darin, dass eine steril ausgelegte Homogenisierungsanlage nicht erforderlich ist, was Kostenvorteile nicht nur auf der Investitionsseite beinhaltet.

Bei unseren Versuchen haben wir hierbei keine Ausölerscheinungen feststellen können.

Die Sojamilch bzw. Sojabasis kann hervorragend zur Herstellung von Tofu, Eiweißkonzentraten, -Isolaten und ähnlichen Produkten verwendet werden, so auch zur Herstellung von Low-Heat und Medium -Heat Sojapulver.

Das Verfahren zur Herstellung einer Sojamilch mit einer verbesserten Eiweißausbeute beinhaltet einen teil oder sämtliche der im Anspruch 1 und den Unteransprüchen angegebenen Verfahrensschritte, bei denen die angewendeten Temperaturen unter der Denaturierungstemperatur der Sojaproteine liegen. Hierbei können native Proteine gewonnen werden, die für die Weiterverarbeitung zu Tofu, Eiweißkonzentraten, - Isolaten und ähnlichen Produkten wie auch Sojapulver auf Grund ihrer funktionellen Eigenschaften von Interesse sind. Die Kombination verschiedener Verfahrensschritte, bei dem die anfallende Sojamaische bei Temperaturen unter der Denaturierungstemperatur von Sojaeiweiß nicht nur aus geschmacklichen Gründen behandelt wird, ermöglicht eine verbesserte Ausbeute bei gleichzeitiger Verbesserung der Farbe.

Der Einsatz eines Konzentrierungssystems zur Deodorisierung unter Verwendung von Direktdampf ermöglicht weiterhin eine geschmackliche Verbesserung des Endproduktes.

Nachfolgend werden die Erfindungen anhand von Ausführungsbeispielen unter Bezug auf die beiliegende Zeichnung näher beschrieben. Es zeigt:

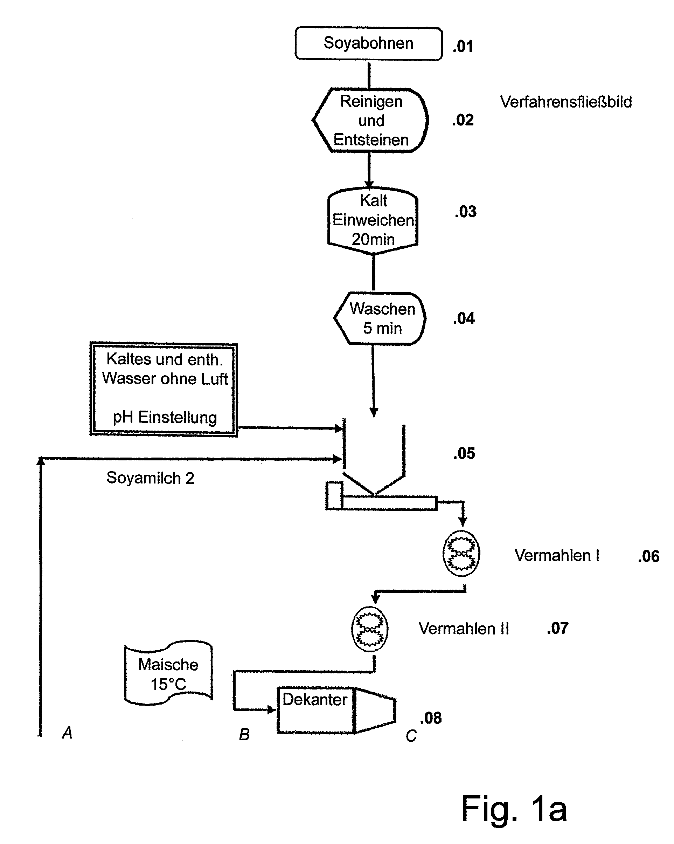

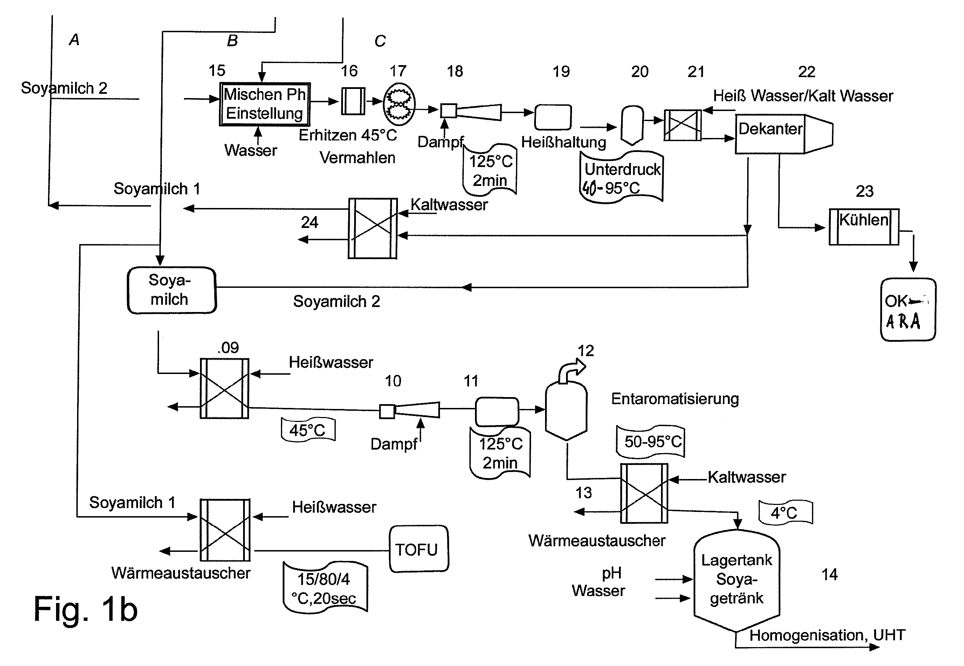

Fig. 1a, b ein unterteiltes Flussdiagramm eines erfindungsgemäßen Verfahrens.

Bei dem Seitenumbruch der Fig.1a und 1b sind die Verfahrensschritte mit A, B und C gekennzeichnet. Hierbei sind die einzelnen Prozeßschritte mit Ziffern versehen worden, damit dieses Verfahrensfließbild leichter nachvollziehbar ist.

Die angelieferten Sojabohnen (01) werden in einer mechanischen Anlage gereinigt und unerwünscht anhaftende Partikel wie Erdklumpen und Steine oder andere Fremdstoffe entfernt. (02) Die Sojabohnen werden in einem kontinuierlichen Prozess mit kaltem Wasser (03) eingeweicht, um den Vermahlungsprozess zu optimieren. Nach diesem Einweichprozess werden die Sojabohnen gewaschen. (04) Über das Einweichen und Waschen werden bereits unerwünschte Geschmacksstoffe aus den Sojabohnen eliminiert und eine Aktivierung der Lipoxydase (Bohnengeschmack) reduziert. Das Waschwasser wird verworfen.

Derart gereinigte und eingeweichte Bohnen werden mit kaltem und vorteilhaft enthärtetem Wasser (05) zwei Vermahlungsstufen zugeführt. Hierbei wird gleichzeitig der pH-Wert in diesem Bohnen / Wasser -Gemisch über 7,0 eingestellt, um die Eiweißausbeute zu verbessern. Gleichzeitig wird dem Wasser / Bohnengemisch vorzugsweise eine bereits behandelte Sojamilch zugegeben um für die Vermahlung ein optimales Flüssigkeits- / Bohnengemisch zu erreichen. (05)

Dieses Wasser- / Sojamilch- / Bohnengemisch mit einer Temperatur von ca. 15°C wird über eine Lochscheiben- (06) und Kolloidmühle (07) vermahlen und bei dieser Temperatur dekantiert. (08) Hierbei erhalten wir zwei Komponenten: eine Sojamilch I (B) und Okara I (Sojabohnenrückstände; C).

Die Weiterbehandlung dieses Okaras I wird später erläutert.

Die von dem Dekanter (08) anfallende Sojamilch I wird aus energetischen Gründen auf 45°C vorerhitzt (09) und mit Direktdampf (10) 2 Minuten bei 125°C erhitzt und 2 min bei dieser Temperatur gehalten. (11).

Diese Erhitzung erfolgt, um die Lipoxydase zu inaktivieren, deren Aktivität die für den negativ empfundenen Bohnengeschmack verantwortlich ist. Anschließend wird das Produkt einer speziellen Entaromatisierungsanlage (12) zugeführt, bei der ähnlich einem Eindampfungssystems hierbei jedoch unerwünschte Geruchs- und Geschmackstoffe aus der Sojamilch entfernt werden. Diese Unterdruckbehandlung erfolgt bis auf Temperaturen von 50°C. Danach wird das Produkt mit Eiswasser (13) auf 4°C gekühlt und in einem Tankbehälter (14) vorgestapelt. In diesem Lagertank erfolgt die entsprechende Eiweißgehalteinstellung auf den gewünschten Endeiweißgehalt des Endproduktes sowie eine pH-Wert Korrektur aus organoleptischen Gründen. In diesem Stapeltank kann weiterhin eine Aromatisierung in Richtung Vanille oder Kakao erfolgen, bevor dieses Produkt über eine Erhitzung zur Abfüllung gelangt.

Das anfallende Okara von dem ersten Dekanter (08) wird für eine Eiweißausbeute Verbesserung wie folgt genutzt.

Das Okara wird mit Wasser (15) vermischt und gegebenenfalls wiederum auf einen gewünschten pH-Wert eingestellt, auf 45 °C erwärmt (16) und in einem weiteren Verfahrensschritt-z.B. in der weiteren Vermahlungsstufe (17) - homogen vermischt. Hierbei kann das Erwärmen auch vor der Vermahlung erfolgen. Damit erreichen wir ein weiteres Herauslösen von nativem Eiweiß aus dem Zellgefüge der bereits vermahlenden Sojabohnen der Schritte 06 und 07. Anschließend wird dieses Produkt mit Direktdampf (18) auf hier beispielhaft 125°C erhitzt, um über eine Heißhaltezeit von 2 Minuten (19) eine ausreichende Inaktivierung der Lipoxydase zu erzielen. Diese Erhitzung erfolgt weiterhin deshalb, um bei diesem Prozess eine Mikroorganismenvermehrung zu vermeiden.

Das derart erhitzte Produkt wird auf eine Temperatur von ca. 40-95°C gekühlt (20) und ggf. weiter temperiert; ggf. über einen Wärmetauscher 21; je nach Vortemperatur mit kaltem oder warmen Wasser betrieben, um über eine 2. Dekantierstufe (22) in Sojamilch 2 und Okara I getrennt zu werden.

Dieses Okara kann gekühlt (23) und einer weiteren Bearbeitung / Verwendung zugeführt werden. Die Sojamilch 2 wird gekühlt (24) und als Teilstrom vorwiegend beim Vermahlen der gereinigten und vorgeweichten Bohnen (05) verwendet.

Diese Sojamilch 2 kann aber auch direkt dem Okara der ersten Dekantierstufe (15) zugeführt werden. Hierbei wird aus den bekannten Gründen eine Eiweißausbeuteerhöhung erreicht.

Bei dem Verarbeiten von Sojabohnen ist es weiterhin von Interesse, native Proteine zur Herstellung von Tofu und anderen Produkten wie beispielsweise Sojaeiweißkonzentraten und ähnlichen Produkten zu gewinnen. Hierbei ist es wünschenswert, die interessanten funktionellen Eigenschaften der Sojaproteine zu nutzen, die bei nativen Proteinen im Gegensatz zu denaturierten Proteinen vorhanden sind. Um native Proteine zu gewinnen, muss ein Erhitzen über der Denaturierungstemperatur der Proteine ausgeschlossen werden. Dieses erfolgt bei dem Prozess der einstufigen Dekantierung, wobei jedoch nur eine Eiweißausbeute in der Größenordnung von 60% zu erreichen ist.

Erfolgt die 2. Dekantierung ohne die behandelte Erhitzung, ist eine Ausbeuteerhöhung auf der Eiweißseite um weitere 15% realistisch. Hierbei wird der Verfahrensweg von (08) über 15, 16, 17, 18, 19, 20 und 21 ohne Temperaturerhöhung genutzt bzw. es entfallen die Prozess-Schritte 17, 18, 19, 20 und 21.

Aus mikrobiologischen Gründen kann es trotzdem von Interesse sein, die Prozess-Schritte 16, 17,18,19 und 20 zu nutzen, da es in diesem Kreislauf 05, 06, 07, 08, 15, 16, 17, 18, 19, 20, 21,22 und 24 eine Anreicherung von Mikroorganismen sowie eine erhöhte Lipoxydaseaktivität geben kann. Mit einer kurzfristigen Erhitzung unterhalb der Denaturierungstemperatur des Sojaeiweißes bis 100 °C mittels der Komponenten 16,18,19 und 20 kann dieses Problem gelöst werden.

Hierbei ist es sinnvoll, den Wärmeaustauscher (21) zu nutzen, um das Produkt je nach Bestimmung geeignet zu temperieren. Beispielsweise wird es bei 10-30 °C dekantiert. Weiterhin ist es mit dem Wärmeaustauscher (21) möglich, eine Dekantierung im Temperaturbereich zwischen 10 und 30 °C sowie im Bereich zwischen 70 und 95 °C durchzuführen.

Die Problematik der Lipoxydase ist bei der Gewinnung einer Sojamilch zur Herstellung von z.B. Tofu und anderen Produkten bei denen Molke anfällt, als sekundär zu betrachten. Bei der Fällung des Sojaeiweißes gehen hierbei die mittels der Stoffumsetzungen der Lipoxydase entstehenden unerwünschten Geruchs- und Geschmacksstoffe in die Molke über und verbleiben weitgehend nicht im Endprodukt.

Aus mikrobiologischen Gründen erfolgt bei dieser Produktgruppe vorzugsweise eine Kurzzeiterhitzung, insbesondere bei Temperaturen zwischen 71 und 80 °C über einen Zeitraum von vorzugsweise 45 bis 12 Sekunden, die eine Denaturierung des Sojaeiweißes nahezu ausschließt.

Bei dem erfindungsgemäßen Ablauf erfolgt weder eine thermische Behandlung noch eine pH-Wert Korrektur für die Bereitstellung der Sojamilch zu Tofu und anderen Produkten. Diese ist aus der Prozessabfolge
- kalt einweichen, (Eiswasser, möglichst enthärtet)
- kalt vermahlen,
- kalt dekantieren
ersichtlich, wobei eine Temperatur vorzugsweise unter 70°C, insbesondere unter 40°C eingehalten werden kann (gekennzeichnet im Verfahrensdiagramm mit "1").

Nach dem Stand der Technik werden die Bohnen bei 15 bis 25 °C eingeweicht, bis sie eine Wasseraufnahme im Verhältnis von Bohnen / Wasser von 1 zu 2,2 bzw. 1 zu 2,5 aufweisen. Dieser Einweichprozess beinhaltet eine diskontinuierliche Arbeitsweise, da hierfür Zeiten von 8 bis 24 Stunden benötigt werden.
Für eine kontinuierliche Arbeitsweise wäre eine wesentlich kürzere Einweichzeit erforderlich bzw. ein Verzicht auf den Einweichprozess.

Das erfindungsgemäße Verfahren beinhaltet eine Einweichzeit von bis zu 30 Minuten, die im Gegensatz zu den bekannten Verfahren kontinuierlich gestaltet werden kann. Es ist bekannt, dass durch das Einweichen eine Verringerung der Trockenmasse bedingt durch den Übergang von Kohlenhydraten in das Waschwasser erfolgt. Dieser Vorgang ist wünschenswert, da hieraus auch eine leichte Geschmacksverbesserung der Sojamilch resultiert.

Ferner wird die Proteinlöslichkeit verbessert, die eine wertvolle Voraussetzung der funktionellen Eigenschaft von Proteinen ist.

Weiterhin ist aus verfahrenstechnischen Parametern von Interesse, eine Wasseraufnahme der Bohnen bei einer Kaltvermahlung zu erzielen, da hierbei der Vermahlungsprozess mit einer Lochscheiben- und Kolloidmühle ermöglicht bzw. erleichtert wird.

Versuche zeigten, dass bereits eine geringfügige Wasseraufnahme der Bohnen sich vorteilhaft auswirkt. Diese Wasseraufnahme ist aus folgendem Versuch ersichtlich:

**Bohnen, benetzt mit Wasser**

| Verweildauer im Wasserbad bei 25 °C | Gewicht der Bohnen in Kg |
|---|---|
| 0 min | 100 |
| 10 min | 128 |
| 20 min | 138 |
| 30 min | 142 |
| 60 min | 156 |
| 7 Std. | 186 |
| 24 Std. | 233 |

| Verweildauer im Wasserbad bei 8 °C | Gewicht der Bohnen in Kg |
|---|---|
| 0 min | 100 |
| 10 min | 123 |
| 20 min | 127 |
| 30 min | 130 |
| 60 min | 143 |
| 7 Std. | 187 |
| 24 Std. | 221 |

Die dabei erzielte Wasseraufnahme in der Zeit von 5 bis 40 min, vorzugsweise 10 bis 30 min ist ausreichend, um eine einwandfreie Vermahlung über eine Lochscheibenmühle und einer Kolloidmühle zu ermöglichen.

Ohne Einweichen würden die Mühlen zu stark belastet werden, wobei auch ein Verstopfen der Mühlen auftreten kann.

Ferner wurde bei dem Verfahren die Temperatur des Einweichwassers auf 2 bis 5 °C reduziert. Hierbei wird die Aktivität der Lipoxydase weitgehend ausgeschaltet. Bei den nachfolgenden Prozess-Schritten haben wir die Temperatur ebenfalls auf den genannten Bereich reduziert, um neben nativen Proteinen ein Produkt mit nahezu fehlendem Bohnengeschmack zu erhalten. Die dabei erzielte Wasseraufnahme ist als ausreichend zu betrachten.

Das erfindungsgemäße Verfahren lässt sich durch optionale Verfahrensschritte weiter optimieren.

Bei dem bisher erfindungsgemäßen Verfahren ist, bedingt durch die einmalige Dekantierung im kalten Zustand, eine Optimierung der Eiweißausbeute nicht gegeben. Es wurde daher das dabei anfallende Okara nach dem ersten Dekanter (08) mit Wasser versetzt und auf den bekannten pH-Wert auf über 7,0 zur Ausbeuteverbesserung eingestellt, wobei auch auf diese pH - Wert Einstellung verzichtet werden kann.
Das dabei erzielte Produkt wurde bei einem Versuch bei Temperaturen von 2 bis 30 °C mit einem Dekanter - einer Vollmantel-Schneckenzentrifuge - dekantiert. Bei einem weiteren Versuch ist dieses rückverdünnte Okara über eine weitere Erhitzungsstufe erhitzt und bei hohen Temperaturen einem 2. nachgeschalteten Dekanter (22) zugeführt worden. (s. Anlage)

Bei diesen Versuchen wurde eine Sojamaische (Maische) auf die Proteinausbeute bei verschiedenen Verfahrensschritten untersucht.

Als Ausgangsmaterial verwendeten wir eine Sojamaische, bei der die Sojabohnen einem Eiweißgehalt von 39,9 % aufwiesen. Diese wurden
a. bei Temperaturen um 20 °C
b. bei Temperaturen um 90 °C
vermahlen. Diese Sojamaische wurde bei Temperaturen" kalt" (25-30 °C) und" heiß" bei Temperaturen um 90 °C dekantiert. Das dabei anfallende Okara, Versuche IV, V, VI, VII und VIII wurde mit
- Wasser bzw.
- Wasser + Sojamilch
vermischt und wiederum "heiß" bzw. "kalt" in einer zweiten Stufe dekantiert.

Die Verwendung einer Sojamilch aus dem ersten Dekanter sollte zeigen, ob aus verfahrenstechnischen Gründen dieses sinnvoll ist, ohne dass eine wesentliche Ausbeuteverringerung vorhanden ist.

Die Versuchsanordnungen ergaben sich wie folgt:
Versuch I : Kaltvermahlung-kalt Dekantieren
Versuch II: Kaltvermahlung-heiß Dekantieren
Versuch III : Heißvermahlung-heiß Dekantieren
Versuch IV ; Okara von dem Versuch I
   Versuch IVa: Verdünnen Okara nur mit Wasser und kalt dekantieren
   Versuch IVb : Verdünnen Okara mit Sojamilch I und Wasser und kalt dekantieren
Versuch V; Okara von dem Versuch II
   Versuch Via : Verdünnen Okara nur mit Wasser und heiß dekantieren
   Versuch Vb : Verdünnen Okara mit Sojamilch II und Wasser und heiß dekantieren
Versuch VI ; Okara von dem Versuch III
   Versuch VIa : Verdünnen Okara nur mit Wasser und heiß dekantieren
   Versuch VIb : Verdünnen Okara mit Sojamilch III und Wasser und heiß dekantieren

Die Auswertung dieser Versuche ergab folgende Ausbeuten, die einmal mit dem ermittelten Eiweißgehalt in der Sojamilch und andererseits mit dem Eiweißgehalt in dem erzielten Okara berechnet wurden. Dabei ist zu berücksichtigen, dass die ermittelten Ausbeuten bei dem "Okara" mit Fehlern behaftet sind. Hierbei war es sehr schwierig, die anfallenden Mengen an Okara bei dem Austritt aus dem Dekanter zu ermitteln, sodass die Versuche über die Berechnung" Sojamilch" relevant sind. Der Vollständigkeit halber werden aber die Ergebnisse mit dem "Okara" auch aufgeführt.

| | Ausbeute ber. für | | Farbe |
|---|---|---|---|
| | Okara | Sojamilch | |
| Versuch I : Kaltvermahlung - kalt Dekantieren | 56,73 | 68,40 | 6,50 |
| Versuch II: Kaltvermahlung - heiß Dekantieren | 72,25 | 72,21 | 5,00 |
| Versuch III: Heißvermahlung - heiß Dekantieren | 61,06 | 68,55 | 7,00 |
| | | | |
| Versuch IV, Okara von dem Versuch I | | | |
| IVa : Verdünnen nur mit Wasser | 75,46 | 87,31 | 9,00 |
| IVb : Verdünnen mit Sojamilch I + Wasser | 70,40 | 67,79 | 8,50 |
| Versuch V, Okara von dem Versuch II | | | |
| Va : Verdünnen nur mit Wasser | 84,91 | 82,31 | 6,50 |
| Vb : Verdünnen mit Sojamilch I | | | |
| + Wasser | 82,79 | 76,70 | 6,00 |
| | | | |
| Versuch VI, Okara von dem Versuch III | | | |
| VIa : Verdünnen nur mit Wasser | 75,22 | 82,92 | 8,50 |
| VIb : Verdünnen mit Sojamilch I + Wasser | 71,42 | 78,82 | 8,00 |

Für eine weitere Ausbeuteverbesserung haben wir das mit Wasser vermischte Okara mit einer Kolloidmühle dispergiert, um eine weitere Auswaschung des Proteins aus der zerstörten Zelle zu erreichen.

Hierbei ergab sich folgende Versuchsanordnung:
Versuch VII : Kaltvermahlung-kalt Dekantieren
   Verdünnen Okara aus dem Versuch I mit Wasser
   Dispergieren - Dekantieren, zweite Stufe" kalt"
Versuch VIII : Heißvermahlung - heiß Dekantieren
   Verdünnen Okara aus dem Versuch III mit Wasser
   Dispergieren - Dekantieren "heiß"

Die dabei erzielten Ergebnisse sind in der nachstehenden Tabelle zusammen gefasst.

| | |
|---|---|
| Ausbeute ber. für | Farbe |
| Okara Sojamilch | |

| | | | |
|---|---|---|---|
| Versuch VII : Kaltvermahlung - kalt Dekantieren | | | |
| Verdünnen Okara vom Versuch I mit Wasser | 81,58 | 90,45 | 9,00 |
| Dispergieren - | | | |
| Dekantieren | | | |
| | | | |
| Versuch VIII : Heißvermahlung - Heißdekantieren | | | |
| Verdünnen Okara vom Versuch | | | |
| III mit Wasser | 72,05 | 86,01 | 8,00 |
| Dispergieren - | | | |
| Dekantieren | | | |

Die Versuche zeigten, dass
- bei einer einstufigen Dekantierung von einer Sojamaische Proteinausbeuten von 62 bis 72 % erzielt worden sind. Hierbei wurde die angelieferte Sojamaische (kalt und heiß vermahlen) kalt und heiß dekantiert,.
- bei dem Verdünnen des Okara mit Wasser und Sojamilch Proteinausbeuten von 69 bis 80 %
- und bei dem Verdünnen des Okara nur mit Wasser Proteinausbeuten von 79 bis 84% erreicht wurden.

Die besten Resultate - auch unter Berücksichtigung der Farbe der erhaltenen Sojamilch - wurden bei den Versuchen VII, IVa, VIa und VIII erzielt. Dieses beinhaltet bei einer Kaltvermahlung der Bohnen eine zweimalige Dekantierung mit einer Rückverdünnung des Okara mit Wasser, einer kalt bzw. heiß Dekantierung bei der 2. Stufe mit einer zusätzlichen Behandlung mittels einer Kolloidmühle des rückverdünnten Okara.

Zu der Beurteilung der Farbe der erzielten Sojamilch ist anzumerken, dass die Beurteilung nach dem" Karlsruher Testschema" erfolgte (Note 9 beste Farbe, Note 1 sehr schlechte Farbe mit den dazugehörenden Abstufungen).

Das Verfahren kann auch derart ausgelegt werden, dass die Erhitzung zur Proteinausbeute einerseits und andererseits zur Inaktivierung der Trypsin-Inhibitoren erfolgt. Über diese Erhitzungsstufe wird eine Proteinausbeute/-optimierung erreicht, wobei diese kombinierten Verfahrensschritte-natives Protein / denaturiertes Protein - im Zusammenhang gesehen werden muss. Die zweite Erhitzung kann mittels eines Platten-/ Röhrenwärmeaustauschers erfolgen. Vorteilhaft ist jedoch eine Erhitzung über eine direkte Dampfinjektion, da hierdurch eine wirksame Inaktivierung der Lipoxydase erfolgt.

Die Dampfinjektion kann aus wärmetechnischen Gründen auch eine Vorerhitzung bis auf 50 °C über Wärmeaustauscher beinhalten.

Bei den bisherigen Verfahren erfolgt die Erhitzung mit Direktdampf auf vorzugsweise 140 °C. Die derart erhitzte Milch wird einem einfach gestalteten Evakuierungsgefäß zugeführt, wobei im Unterdruck eine sofortige Abkühlung bis 90 °C erfolgt. Diese Unterdruckbehandlung beinhaltet eine gewünschte teilweise Entaromatisierung.

Bei dem erfindungsgemäßen Verfahren wird die anfallende Sojamilch des Dekanters A bzw. B vorzugsweise im Plattenwärmetauscher vorerhitzt und mit Direktdampf z.B. bis 125°C oder bis auf auf 140°C erhitzt, wobei zur Inaktivierung der Lipoxydase Zeit / Temperaturkorrelation analog einer F-Wert Berechnung von bis zu Fo-Wert = 30 erfolgen sollte. Der Fo-Wert ist ein Index für eine Erhitzung zur Abtötung von Mikroorganismen. Bei einem Fo-Wert von 10 kann davon ausgegangen werden, dass alle relevanten Keime in dem Produkt abgetötet worden sind.

Diese Erhitzung kann in einem Düsensystem mit einer direkten Dampfinjektion in einem Rohrsystem erfolgen, deren Oberfläche von außen gekühlt wird.

Danach erfolgt eine äußerst schonende Entaromatisierung mit einer Abkühlung auf 90 °C bis 40 °C über einen Fallstromverdampfer (System zur Erzielung einer großen Oberfläche) mit dem Ergebnis, das über den Fallstromverdampfer eine weitaus größere Oberfläche mit verlängerten Standzeiten. Hierbei wird beispielsweise die zu entaromatisierende Flüssigkeit auf Heizrohre aufgegeben, um als dünner Film an den Innenwänden nach unten zu gelangen.

Durch ein äußeres Beheizen der Rohre beginnt der Flüssigkeitsfilm zu sieden und dabei teilweise zu verdampfen, wobei ein kontinuierlich langsamer Verdampfungsprozess erfolgt. Hierbei werden unerwünschte Geruchs- und Geschmacksstoffe eliminiert, d.h. ein unerwünschter Bohnengeschmack ist im Endprodukt kaum bzw. nicht mehr wahrnehmbar, das zu einem qualitativen Vorteil bezüglich des Geschmackes gegenüber den bisher bekannten Verfahren führt. Hierbei können jedoch auch andere Entaromatisierungsanlagen verwendet werden.

Bei den bisher beschriebenen bekannten Verfahren wird eine direkte UHT Erhitzungsanlage mit einer Homogenisierung im sterilen Bereich eingesetzt. Da der Emulgatoranteil in Sojamilch wesentlich höher als beispielsweise in Konsumkuhmilch ist, kann auf die Homogenisierung im aseptischen Bereich verzichtet werden. Bei dem erfindungsgemäßen Verfahren erfolgt die Homogenisierung im nicht sterilen Bereich vor der eigentlichen UHT-Erhitzung. Hierbei ist ein Kostenvorteil anlagemäßig gegeben, da die Homogenisieranlage nicht steril ausgelegt werden muss.

Besonders vorteilhaft ist auch das selbstständig für sich erfinderische Verfahren nach Anspruch 32 oder 33 und nach den darauf folgenden Unteransprüchen.

Vorstehend wurde ein erstes erfindungsgemäßes Verfahren beschrieben. Ein wichtiger Gesichtspunkt ist bei diesem Verfahren die Deodorisierung. Bei der Zerkleinerung der Sojabohnen wird die Lipoxydase aktiviert, deren Inaktivierungstemperatur bei über 80° C liegt. Zu berücksichtigen ist dabei, dass die Umsetzungen bedingt durch die Enzymaktivität bei höheren Temperaturen zunehmen und daraus ein Bohnengeschmack resultiert. Dieser als negativ empfundener Geschmack besteht zum Teil aus flüchtigen Komponenten, die durch eine Deodorisierung größtenteils aus der Sojamilch entfernt werden können.

Die erfindungsgemäße Aufgabe der weiteren, auch unabhängig zu betrachtenden Erfindung besteht wiederum darin, die Entstehung dieses Bohnengeschmackes jedenfalls weitgehend zu vermeiden.

Die Erfindung löst diese Aufgabe durch den Gegenstand der Ansprüche 32 und 33.

Vorteilhafte Ausgestaltungen dieser Erfindung sind den weiteren Unteransprüchen 33 ff. zu entnehmen.

Anspruch 33 schafft ein Verfahren zur Herstellung einer Sojamilch, dadurch gekennzeichnet, dass die Sojabohnen mittels Extrudertechnologie zur Gewinnung von nativen Proteinen und zur Geschmacksverbesserung vermahlen werden, so dass die Zerkleinerung der Sojabohnen bereits im Extruder erfolgt.

Anspruch 34 schafft ferner ein Verfahren zur Herstellung einer Sojamilch, bei dem nicht eingeweichte Sojabohnen direkt mittels der Extrudertechnologie vermahlen werden.

Vorzugsweise werden die mittels Extrudertechnologie vermahlenen Sojabohnen mit Wasser vermischt werden, so dass ein Brei gebildet.

Es ist ferner zweckmäßig, wenn die mittels Extrudertechnologie vermahlenen Sojabohnen mit Wasser vermischt werden, woraufhin dieses Gemisch in Sojamilch und Okara getrennt wird.

Besonders bevorzugt erfolgt die Extruderbehandlung derart, dass nur eine geringfügige Denaturierung der Proteine gegeben ist.

Mit der Extrudertechnolgie kann der Bohnengeschmack reduziert werden.

Im Extruder werden vorzugsweise Temperaturen eingestellt, die zumindest eine Inaktivierung von 90 % der Lipoxydase ergeben.

Vorzugsweise werden ferner bei Temperaturen im Extruder von 100°C bis 150 °C u.a. Förderelemente eingesetzt werden, die einen rückfördernden Einfluss bezüglich einer längeren Verweilzeit im Extruder ermöglichen.

Vorzugsweise erfolgt die Zerkleinerung der Bohnen mittels der Extrusion im Extruder bei über 90 °C.

Vorzugsweise erfolgt die Behandlung im Extruder bei 90°C-140 °C, um eine Gewinnung von einem hohen Anteil an nicht denaturierten Proteinen zu erreichen.

Es ist zweckmäßig, wenn durch rückfördernde Schneckenelemente eine möglichst hohe Inaktivierung der Lipoxydase unter Beibehaltung eines hohen Anteils an nativen Proteinen erfolgt.

Ein Herauslösen der Proteine erfolgt vorzugsweise durch die Verfahrensschritte Einweichen, Vermischen, Homogenisieren.

Die Zerkleinerung mittels der Homogenisierung kann einstufig und zweistufig erfolgen.

Es ist ferner denkbar, dass die Zerkleinerung des extrudierten Produktes durch Kavitation erfolgt.

Vorzugsweise erfolgt zur Ausbeuteverbesserung auf der Eiweißseite eine pH - Wert Anhebung bis zu einem Bereich von pH 9.

Insbesondere erfolgt aus organoleptischen Gründen eine Neutralisation bis auf einen pH-Wert von 6,5.

Es ist auch denkbar, dass vor dem Zerkleinern eine Inaktivierung der Sojabohnen im nicht zerkleinerten Zustand durch ein Dampfschälverfahren erfolgt.

Durch den Einsatz der Extrudertechnologie wird eine Zerkleinerung der Bohnen erreicht, die aufgrund ihrer geringen thermischen Belastung die Möglichkeit zur Gewinnung von nativen Proteinen ohne Bohnengeschmack ermöglicht.

Mit der Extruderbehandlung ist bei der Gewinnung von vorwiegend nativen Proteinen eine Geschmacks- und Farbverbesserung gegeben.

Mittels der Extrudertechnologie wird auch auf einfache Weise eine ausreichende Inaktivierung der Lipoxydase zur Herstellung von pulvrigen Substanzen mit einem hohen nativen Eiweißgehalt erreicht.

Durch den Einsatz der Extrudertechnologie kann die Zerkleinerung zudem derart gestaltet werden, dass bei einer vorzugsweise sehr kurzzeitigen Erhitzung im Sekundenbereich ein Produkt erzielt wird, wodurch bei einer weiteren Verarbeitung durch die erfindungsgemäßen Prozessschritte ebenfalls ein nahezu natives Eiweiß mit einer erhöhten Ausbeute und einem reduzierten Bohnengeschmack erreicht wird.

Weitere Versuche zur Geschmacksverbesserung einer Sojamilch haben ergeben, dass eine Inaktivierung der Lipoxydase bereits bei der Behandlung der Sojabohnen erreicht werden kann.

Hierbei wurden Bohnen mit einem Wassergehalt um 10 % bei 140 bis 150 °C im Sekundenbereich in einem Zweiwellenextruder extrudiert, wobei eine Nacherhitzung im Extruderkopf erfolgte. Bei unseren Versuchen haben wir das Produkt im Extruder auf Temperaturen um 130 °C erhitzt und vor dem Austritt aus dem Extruder eine Temperatur von 150 °C eingestellt. Das aus dem Extruder erzielte Produkt wies nach einer groben Zerkleinerung eine leicht mehlige bis mehlig-körnige Struktur auf.

Die Teilchengröße lag hierbei zwischen 10 bis 100 µm (Mikrometer) bei einer relativen Häufigkeit von 23 % im Bereich zwischen 37 und 45 µm. Die Verteilungskurve lässt jedoch vermuten, dass es sich im größeren Bereich bis 100 µm ev. um Agglomerate handelte.

Das Schüttgewicht betrug 500-740 g/l in Abhängigkeit von der Behandlung im Extruder. Die dabei erzielten Differenzen bei dem Schüttgewicht beruhen auf der unterschiedlichen Zugabemenge bei dem Prozess, wobei gleichzeitig auch die Körnigkeit dieses Zwischenproduktes eingestellt werden konnte. Dieses Produkt kann entweder weiter vermahlen und / oder mit Wasser versetzt werden und bsp. mit einer Kolloidmühle weiter verarbeitet zu werden.

Bei der Weiterverarbeitung dieses Produktes zeigte sich, dass ohne weitere Vermahlung eine unzureichende Eiweißausbeute vorhanden war. Das grob zerkleinerte Produkt wurde mit Heißwasser und unter Druck bei 110 °C im Verhältnis 100g mit 11 Wasser versetzt und sofort abgekühlt.

Bei der organoleptischen Untersuchung zeigte sich, das kein Bohnengeschmack bei den Proben auftrat, die sofort nach der Heißwasser- / Dampfbehandlung abgekühlt wurden. Ein Bohnengeschmack war deutlich wahrnehmbar, wenn diese Proben langsam gekühlt wurden. Dieses zeigt, dass bei der thermischen Behandlung mit einem Extruder das Enzym Lipoxydase noch nicht ausreichend inaktiviert wurde, obwohl ein Fo-Wert bei 150 °C mit einer Heißhaltezeit von 1 sec. = 16 bereits vorhanden war.

Die weitere Behandlung erfolgte mit dem skizzierten Verfahren der Kaltvermahlung, wobei auf eine Desodorierung teilweise verzichtet wurde, da die mit der Extruderbehandlung - Lipoxydaseproblematik-erzielte Sojamaische nahezu keinen wahrnehmbaren Bohnengeschmack mehr aufwies.

Nach der Dekantierung wurde bei der "Kaltbehandlung" eine Sojamilch gewonnen, die auf Grund ihrer geringen thermischen Belastung (Q10 - Wert) eine Eiweißdenaturierung erfahren hat, die bei dieser kurzen Temperatureinwirkung nicht als relevant zu bezeichnen ist. Dieses Produkt erwies sich für die Tofuherstellung als besonders geeignet, da hierbei eine gute Festigkeit des Endproduktes mit einer entsprechenden hellen Farbe und einer guten Eiweißausbeute resultierte.

Ausgangspunkt der weiteren Erfindung ist damit die Verwendung des Extruders. Hierbei ist es gleichzeitig möglich, die Zerkleinerung der Bohnen und die Erhitzung der Bohnen derart zu gestalten, dass eine weitgehende Inaktivierung der Lipoxydase erfolgt.

Für weitere Extruderversuche verwendeten wir einen gleichsinnig drehenden Zweischneckenextruder des Unternehmens Berstorff mit der Bezeichnung ZE 40AX37,5DHT mit einem Schneckendurchmesser von 43 mm und einer Schneckenlänge von 1500 mm, einem Antriebsmotor von 18 KW mit einer variablen Drehzahl von 15 bis 300 U/min. Die Konfiguration der Schnecke wurde unter den Aspekten der Schereinwirkung mit fördernden Knetblöcken gewählt.

Hierbei hat sich gezeigt, dass die Temperaturen im Extruder bedeutsam sind.

Versuche in einem Temperaturbereich von 15-50 °C im Extruder zeigten, dass in der daraus hergestellten Sojamilch ein ausgeprägter Bohnengeschmack vorhanden war.

Versuche bei 100 °C, 120 °C und 140 °C im Extruder ergaben, dass hierbei eine erhebliche Reduzierung des Bohnengeschmackes in der daraus jeweils hergestellten Sojamilch von den Testpersonen ermittelt wurde. Hierbei waren Temperaturen um 120 °C im Extruder von besonderem Interesse.

Bei den Versuchen zeigte sich, dass bei der Verwendung von rückstauenden Knetblöcken im Extruder bei einer Temperatur um 120°C in der daraus hergestellten Sojamilch kein Bohnengeschmack feststellbar war. Wurde jedoch bei annähernd gleicher Temperatur auf die rückstauenden Knetblöcke verzichtet, wurde bei der daraus hergestellten Sojamilch ein Bohnengeschmack sensorisch ermittelt. Eine gewisse Verweilzeit im Extruder zur Inaktivierung der Lipoxydase-Eliminierung des Bohnengeschmackes-(Zeit / Temperatur Korrelation) ist daher erforderlich. Bei Temperaturen um 140 °C konnte diese Problematik nicht beobachtet werden.

Versuche bei höheren Temperaturen, d.h. über 140 °C ergaben bei der daraus hergestellte Sojamilch Ausbeuteverluste. Rein optisch betrachtet war das extrudierte Produkt bräunlich verfärbt. Daraus konnte geschlossen werden, dass eine erhebliche Eiweißdenaturierung erfolgte, wodurch ein Herauslösen des Eiweiß aus der beschädigten Zelle nur noch bedingt möglich war. Dieses war auch aus der daraus hergestellten Sojamilch ersichtlich. Diese zeigte keine typische weiße Farbe. Diese Sojamilch war gelblich, bräunlich verfärbt und etwas durchsichtig. Allein aus dieser optischen Betrachtungsweise kann geschlossen werden, dass ein wirtschaftliches Herauslösen des Eiweiß aus dem extrudierten Produkt nicht erfolgte.

Bei der weiteren Behandlung wurde zur Eiweiß-Ausbeuteverbesserung das extrudierte Produkt in Wasser im Verhältnis Bohnen zu Wasser 1 : 9 bei anderen Versuchen 1 : 7 intensiv mechanisch behandelt. Hierbei verwendeten wir eine Mischturbine (Ultra Turrax) über eine Zeit von 5 bis 15 min. Danach wurde das "Wasser-extrudierte Bohnengemisch" bei unterschiedlichen Drücken in mehreren Stufen homogenisiert und anschließend mittels einer Zentrifuge in Bechergläsern dekantiert. Der Überstand, die Sojamilch, wurde auf den Eiweißgehalt untersucht und die Eiweißausbeute bezogen auf den Eiweißgehalt der Bohnen ermittelt. Die organoleptische Prüfung bezüglich Geschmacks erfolgte nach dem Karlsruher Testschema. (Beste Beurteilung = 9, schlechteste Beurteilung = 0)

Verwendet wurde u.a. folgende Verfahrensweise:

| Max. Temp. im Extruder in °C | Homogenisierstufen | Drück in bar | Proteinausbeute im Überstand nach Dekantierung in % | Geschmack | Farbe |
|---|---|---|---|---|---|
| | | | | | |
| 20 | 0 | keine | 86 | 3 | trüb, milchig |
| 20 | 1 | 70 | 41 | 3 | " |
| 20 | 2 | 20070 | 35 | 3 | " |
| | | | | | |
| 100 | 0 | keine | 46 | 7,5 | milchig |
| 100 | 1 | 70 | 44 | 7,0 | " |
| 100 | 2 | 200/70 | 33 | 7,5 | " |
| 120 | 0 | keine | 46 | 8,0 | milchig |
| 120 | 1 | 70 | 50 | 7,5 | " |
| 120 | 2 | 200/70 | 49 | 7,5 | " |
| | | | | | |
| 140 | 0 | keine | 43 | 7,5 | milchig |
| 140 | 1 | 70 | 52 | 7,5 | » |
| 140 | 2 | 200/70 | 65 | 8,0 | » |

Bei der Auswertung der o.g. Ergebnisse ist zu berücksichtigen, dass die Zentrifugierung mit einer Laborzentrifuge nicht die Trennung ergibt, die mittels eines industriellen Dekanters erreicht werden kann.

Andere Versuche zeigten, dass im Vergleich Laborzentrifuge-Dekanter ein wesentlich geringerer Rückstand mit einem industriell eingesetzten Dekanter erzielt wird, da der abgetrennte Rückstand eine höhere Trockensubstanz aufweist. Hierdurch verringert sich der wasserlösliche Eiweißanteil im Sediment, das zu einer höheren Eiweißausbeute im Überstand führt. Erfahrungsgemäß kann die Aussage getroffen werden, dass bei einem Einsatz zur Trennung mit einem industriellen Dekanter die Eiweißausbeute bei unseren Versuchen um 20 bis 30 % höher liegen würde. Weiterhin ist zu berücksichtigen, dass u.a. über die Zulaufleistung bei einem Dekanter oder einer Zentrifuge die Trennphase beeinflusst werden kann und somit auch der abzutrennende Anteil

Ferner zeigte sich bei diesen Versuchen, dass das Auslösen des Eiweiß aus dem extrudierten Produkt vorzugsweise mit kaltem Wasser erfolgen sollte. Gerade bei den Versuchen bei 120 °C ergab diese Versuchsreihe einen einwandfreien Geschmack. Erfolgte das Auslösen bei Temperaturen um 40 °C mit anschließender Homogenisation bei gleicher Temperatur, war ein Bohnengeschmack feststellbar. Hier zeigt sich, dass bei der Temperatur und der gewählten Schneckenkonfiguration noch eine Restaktivität der Lipoxydase vorhanden ist, deren negative Auswirkungen durch die Verwendung von kaltem Wasser eliminiert werden können.
Wird bei diesem Verfahren die entsprechende Temperatur von beispielsweise120°C im Extruder bei entsprechender Schneckenkonfiguration eingehalten und für das Auslösen des Eiweiß aus den zerkleinerten Zellen kaltes Wasser verwendet, kann aus geschmacklichen Gründen auf eine Desodorierung verzichtet werden.

Eine weitere Ausbeuteverbesserung bei diesem Verfahren kann dadurch erzielt werden, dass das zu dekantierende/separierende Produkt auf pH Werte von bis zu pH 9,0 eingestellt wird. Da sich dadurch aber im Endprodukt ein seifiger Geschmack ergibt, ist eine nachfolgende Neutralisierung auf pH-Werte von 6,8-7,5 empfehlenswert.

Nachfolgend wird die Herstellung einer Sojamilch nach dem Extruderverfahren beispielhaft beschrieben:

Angelieferte Sojabohnen (Schritt 100) werden direkt einer Extruderbehandlung (Schritt 101) unterzogen.

Danach erfolgt ein Vermischen mit Wasser und eine intensive mechanische Behandlung durch Rühren bzw. einer Rührphase mit einer Mischturbine (Schritt 102)

Sodann erfolgt eine Homogenisierung bei Drücken um 200 bar (Schritt 103)

Daraufhin erfolgt eine Dekantieren in eine feste und eine flüssige Phase mittels Dekanter oder Separator (Schritt 104).

Weiterbehandlung der flüssigen Phase = Sojamilch bzw. Sojamilchbasis in weiterenan sich je für sich bekannten - Verfahrensschritten (z.B. Erhitzen 105; Kühlen 106; Zwischenlagern in einem Lagertank 107; ggf hier: PH-Wert-Einstellung und/oder Zugabe von Wasser zur Eiweißeinstellung); ggf. UHT-Erhitzung und Abfüllung (Schritt 108).

Weitere Versuche zur Verbesserung der Ausbeute erfolgten somit dahingehend, dass der Rückstand (Okara I) mit Wasser im Verhältnis 1:4 Anteilen aufgelöst und wiederum zentrifugiert wurden (Schritt 109, 110). Die gesamte Eiweißausbeute konnte hierbei wesentlich gesteigert werden.

Vom Okara kann somit, ggf. nach der Zugabe von Wasser, einem Mischen und einer Ph-Wert-Einstellung (Schritt 109) in einem weiteren Dekanter 110 weitere Sojamilch abgetrennt werden.

Es bietet sich an, einen Teil der Sojamilch rückzuführen und mit zerkleinerten Bohnen aus dem Extruder 101 zu vermischen oder diese Sojamilch direkt den weiteren Schritten 105 bis 108 zuzuführen.

Dieses ist aus dem Verfahrensfließbild der Anlage ersichtlich.

Bei einem großtechnischen Versuch haben wir extrudierte Bohnen mit Wasser versetzt. Die gesamte Menge betrug hierbei 400 Kg.

Hierfür verwendeten wir den vorgenannten Extruder des Unternehmens Berstorff mit einem Temperaturprofil von max. 140 °C und folgenden Daten:

| | |
|---|---|
| Durchsatz : | 37,5 Kg/h |
| Drehzahl: | 150 min-1 |
| Spez. Füllgrad: | 0,375 Kg*min/h |
| Produktmenge: | 150 Kg |

Eine bevorzugte Konfiguration der Extruderschnecke ist aus Fig. 3 ersichtlich. Das dazugehörige Temperaturprofil kann aus Fig. 4 entnommen werden.

Die Sojabohnen wurden extrudiert, bei - 24 °C tiefgefroren und nach einem Tag verarbeitet, wobei vor der Verarbeitung das Produkt 12 Stunden bei einer Temperatur um 5 °C gelagert wurde.

Die extrudierten Sojabohnen verarbeiteten wir wie folgt:
60 Kg Bohnen wurden mit 340 Kg Wasser vermischt, Temperatur 12, 7 °C
Vermischen im Tankbehälter mit einem Turbinenmischer, 15 min (s. Analyse Slurry I)
Homogenisieren bei 200 bar, Temperaturanstieg auf 18,7°C (siehe Analyse Slurry I)
Dekantieren in 75 Kg Okara I und 299,5 Kg Sojamilchbasis I bzw. Sojamilch I (s. Analyse)
Vermischen von 75 Kg Okara I mit 210 Kg Wasser, Temp. 13 °C (s. Analyse Slurry II)
Homogenisieren bei 200 bar
Dekantieren in 26 Kg Okara II und 229 Kg Sojamilchbasis II (s. Analyse).

### Temperatur Okara II 25 °C

Dieser Versuch ergab bei der ersten Dekantierung einen Anfall an Okara I von 75 Kg und einer Sojamilchbasismenge von 299,5 Kg.

Die zweite Dekantierung, bei der 75 Kg mit 210 Kg Wasser versetzt wurden ergab einen Anfall an Okara I von 26 Kg und eine Sojamilchbasismenge II von 229 kg, wobei die Ausgangsmenge von Okara I mit 210 Kg kaltem Wasser versetzt wurde.

Die cont. Leistungsermittlung bei der zweiten Dekantierung ergab hierbei eine Leistung von 110,5 Kg Sojamilchbasis II und 9,5 Kg Okara II in 6 min, berechnet auf die Ausgangsmenge von 285 Kg ergibt dieses einen Okaraanteil von 22,56 Kg.

Die analysierten Proben auf Trockensubstanz und Eiweiß ergaben die Werte der Tabelle der Fig. 5.

Da bei derartigen Versuchen die Verluste relativ hoch sind, kann daher bezüglich der Eiweißausbeute nur ein ungefährer Wert angegeben werden. Unter Berücksichtigung der angefallenen Mengen und der alleinigen Leistungsermittlung werden für das angefallene Okara II bezogen auf die Ausgangsmenge von 60 Kg Werte von 23 Kg und 30 Kg ermittelt.

Bei einer eingesetzten Sojabohnenmenge von 60 Kg und einem angefallenen Okaraanteil II

| | |
|---|---|
| von 23 kg wurde eine Eiweißausbeute von | 94% |
| und von 30 Kg wurde eine Eiweißausbeute von | 92 % erzielt. |

Unter Berücksichtigung von eventuell nicht erfassten Verlusten sollte hierbei ein Sicherheitszuschlag von 10 % eingerechnet werden. Von der Annahme ausgehend, dass hierbei ein Okara II Anteil sich von 33 Kg ergeben würde, beträgt die Eiweißausbeute 91 % .

Interessant war hierbei, dass in der Sojamilchbasis kein ausgeprägter Bohnengeschmack vorhanden war. Weiterhin war die erzielte Farbe der Sojamilchbasis als ausgesprochen weißlich zu bezeichnen.

Dabei ist zu berücksichtigen, dass der erste Dekanter eine Leistung von 600-12001/h aufwies. Der dabei erzielte Rückstand um 23 %, der mit einer Laborzentrifuge ermittelt wurde, könnte in Richtung Ausbeuteverbesserung noch optimiert werden.

Weiterhin ist zu bemerken, dass die Leistung der Homogenisieranlage bei der Zerkleinerung der Slurry zurückging. Betrug diese bei der Homogenisierung von Wasser 340 1/h, so lag die Leistung der Homogenisieranlage bei der Slurry I bei 200 Kg/h und bei der Slurry II bei 300 Kg/h. Da der Homogenisator zur Zerkleinerung des extrudierten Produktes, bedingt durch die dabei auftretende Kavitation, eingesetzt wurde, ist dieses Ergebnis nachvollziehbar.

Bei der vorliegenden Erfindung handelt es sich um ein Verfahren, bei dem die Inaktivierung der Lipoxydase bereits vor der eigentlichen Prozesstechnologie erfolgt. Hierbei wird über einen Extruder während der Zerkleinerung der Bohnen eine Temperatur im Extruder gewählt, bei der eine nahezu vollständige Inaktivierung der Lipoydase erfolgt. Hierbei werden im Extruder vorzugsweise Temperaturen von 100 bis 140 °C eingesetzt. Die übliche Deodorisierung zur Herstellung einer Sojamilch, bedingt durch die Aktivität der Lipoxydase bezüglich Bohnengeschmack ist somit nicht mehr erforderlich. Der gleiche Effekt kann auch über einen Dampfschäler erfolgen, mit dem die Bohnen unter Überdruck schlagartig auf Temperaturen zur Inaktivierung der Lipoxydase erhitzt werden. Eine pH- Wert Einstellung mit nachfolgender Neutralisation kann dabei zur Ausbeuteverbesserung sinnvoll sein.

## Patentansprüche

1. Verfahren zur Herstellung einer Sojamilch bzw. eines Getränkes auf Sojabasis, **dadurch gekennzeichnet, dass** dieses Produkt durch folgende Verfahrensschritte erhalten wird:
a) Einweichen der Sojabohnen und
b) Vermahlen der Sojabohnen zu einem Brei,
c) Trennung des Sojabreis in Sojamilch und Okara im Zentrifugalfeld,
d) Durchführung der Schritte a) und b) und vorzugsweise c) bei Temperaturen von 0 °C bis 40 °C, die zur Gewinnung nativer Proteine geeignet sind;
e) woraufhin die Sojamilch einer Desodorierung unterzogen wird, um den Bohnengeschmack zu verringern.

2. Verfahren zur Herstellung einer Sojamilch nach Anspruch 1, **dadurch gekennzeichnet, dass** die Sojabohnen in den Schritten a) und b) bei Temperaturen von 2° C bis 40° C eingeweicht und vermahlen werden.

3. Verfahren zur Herstellung einer Sojamilch nach Anspruch 1 oder 2, **dadurch gekennzeichnet, dass** die Sojabohnen in den Schritten a) und b) bei Temperaturen von 2° C bis 20° C eingeweicht und vermahlen werden.

4. Verfahren zur Herstellung einer Sojamilch nach einem der Ansprüche 1 bis 3, **dadurch gekennzeichnet, dass** die Sojabohnen im Schritt a) über ein kontinuierliches Verfahren eingeweicht werden.

5. Verfahren zur Herstellung einer Sojamilch nach einem der vorstehenden Ansprüche, **dadurch gekennzeichnet, dass** die Sojabohnen in den Schritten a) und b) mit entgastem Wasser und/oder Eiswasser eingeweicht und vermahlen werden.

6. Verfahren nach einem der vorstehenden Ansprüche, **dadurch gekennzeichnet, dass** die Sojabohnen über einen Zeitraum von weniger als 60 min eingeweicht werden.

7. Verfahren nach einem der vorstehenden Ansprüche, **dadurch gekennzeichnet, dass** die Sojabohnen über einen Zeitraum von weniger als 30 min eingeweicht werden.

8. Verfahren zur Herstellung einer Sojamilch nach einem der vorstehenden Ansprüche, **dadurch gekennzeichnet, dass** das gewonnene Okara mit Wasser und/oder mit Sojamilch vermischt wird.

9. Verfahren zur Herstellung einer Sojamilch nach einem der vorstehenden Ansprüche, **dadurch gekennzeichnet, dass** das mit Wasser und oder mit Sojamilch vermischte Okara einer weiteren intensiven Vermischung unterzogen wird.

10. Verfahren zur Herstellung einer Sojamilch nach Anspruch 9, **dadurch gekennzeichnet, dass** die intensive Vermischung mit einer Kolloidmühle oder einem Emulsifier erfolgt.

11. Verfahren nach einem der vorstehenden Ansprüche, **dadurch gekennzeichnet, dass** die Trennung des Sojabreis in Sojamilch und Okara im Zentrifugalfeld, insbesondere mit einem Separator und/oder einer Vollmantel-Schneckenzentrifuge erfolgt.

12. Verfahren nach einem der vorstehenden Ansprüche, **dadurch gekennzeichnet**, das bei dem gesamten Verfahren bis zur Desodorierung zur Herstellung einer Sojamilch Temperaturen unter 90 °C, insbesondere unter 70°C, vorzugsweise unter 40°C eingehalten werden.

13. Verfahren nach einem der vorstehenden Ansprüche, **dadurch gekennzeichnet, dass** die Desodorierung mittels eines thermischen Verfahrens erfolgt.

14. Verfahren nach einem der vorstehenden Ansprüche, **dadurch gekennzeichnet, dass** die Desodorierung mittels eines thermischen Verfahrens erfolgt, bei dem der Bohnengeschmack vermindert wird, wobei vorzugsweise unter atmosphärischem Druck Temperaturen von 98° C bis 103° C eingehalten werden.

15. Verfahren nach einem der vorstehenden Ansprüche, **dadurch gekennzeichnet, dass** die Desodorierung mittels eines Eindampfverfahrens erfolgt.

16. Verfahren nach einem der vorstehenden Ansprüche, **dadurch gekennzeichnet, dass** die Desodorierung mittels einer Entaromatisierungsanlage erfolgt.

17. Verfahren zur Herstellung einer Sojamilch nach einem der vorangegangenen Ansprüche, **dadurch gekennzeichnet, dass** eine Erhitzung vor der Desodorierung mittels Direktdampf erfolgt.

18. Verfahren zur Herstellung einer Sojamilch nach einem der vorangegangenen Ansprüche, **dadurch gekennzeichnet, dass** die Erhitzung vor der Desodorierung mit lebensmittelgeeignetem Direktdampf erfolgt.

19. Verfahren zur Herstellung einer Sojamilch nach Anspruch 18, **dadurch gekennzeichnet, dass** vor der Erhitzung mit Direktdampf eine Vorerhitzung über einen Wärmeaustauscher erfolgt.

20. Verfahren zur Herstellung einer Sojamilch nach Anspruch 19, **dadurch gekennzeichnet, dass** die Vorerhitzung bis auf 45° C, vorzugsweise bis auf 50 °C erfolgt.

21. Verfahren nach einem der vorstehenden Ansprüche, **dadurch gekennzeichnet, dass** die Erhitzung der Sojamilch mit Direktdampf über einen Zeitraum von weniger als 180 sec, vorzugsweise weniger als 120 sec und ganz besonders bevorzugt weniger als 60 sec erfolgt.

22. Verfahren nach einem der vorstehenden Ansprüche, **dadurch gekennzeichnet, dass** die Erhitzung der Sojamilch mit Direktdampf bis auf eine Temperatur von max. 110° bis 140°C, vorzugsweise bis auf 110°C bis 130°C und ganz besonders bevorzugt bis auf 120 °C bis 125°C erfolgt.

23. Verfahren nach einem der vorstehenden Ansprüche, **dadurch gekennzeichnet, dass** die Desodorierung mittels eines Eindampfverfahrens erfolgt, bei dem die Dampfvolumina wenigstens 1,5 kg Dampf / kg Produkt betragen.

24. Verfahren zur Herstellung einer Sojamilch nach einem der vorstehenden Ansprüche, **dadurch gekennzeichnet, dass** bei der Desodorierung zunächst eine Erhitzung nach Anspruch 22 und dann ein Abkühlen bis vorzugsweise auf 85° C erfolgt.

25. Verfahren zur Herstellung einer Sojamilch nach einem der vorstehenden Ansprüche, **dadurch gekennzeichnet, dass** bei der Desodorierung eine Entspannung im Verdampfersystem bis auf 45°C, vorzugsweise bis auf 40 °C, erfolgt.

26. Verfahren zur Herstellung einer Sojamilch nach einem der vorstehenden Ansprüche, **dadurch gekennzeichnet, dass** die Entspannung in einem Fallstromverdampfer erfolgt.

27. Verfahren nach einem der vorstehenden Ansprüche, **dadurch gekennzeichnet, dass** die Sojamilch einer UHT-(Ultrahochtemperatur)-Erhitzung unterzogen wird.

28. Verfahren nach einem der vorstehenden Ansprüche, **dadurch gekennzeichnet, dass** die Sojamilch einer UHT-(Ultrahochtemperatur)-Erhitzung unterzogen wird, bei der sie im nicht aseptischen Bereich homogenisiert wird.

29. Verfahren nach einem der vorstehenden Ansprüche, **dadurch gekennzeichnet, dass** bei der UHT-(Ultrahochtemperatur)-Erhitzung bei Drücken von mehr als 200bar und bei einer anschließenden direkten UHT-Erhitzung ein Kavitationseffekt erzielt wird, der zu einer Zerkleinerung von Fettkügelchen führt.

30. Verfahren nach einem der vorstehenden Ansprüche, **dadurch gekennzeichnet, dass** eine ein- oder zweistufige Homogenisierung erfolgt.

31. Verfahren zur Herstellung einer Sojamilch nach einem der vorstehenden Ansprüche, **dadurch gekennzeichnet, dass** die gewonnene Sojamilch mittels eines Sprühturmes bei Produkttemperaturen unterhalb der Denaturierung von Sojaproteinen getrocknet wird.

32. Verfahren zur Herstellung einer Sojamilch nach Anspruch 31, **dadurch gekennzeichnet, dass** bei der Sprühtrocknung Produkttemperaturen unter 80 °C Anwendung finden.

33. Verwendung einer Sojamilch, hergestellt nach einem der vorstehenden Ansprüche, zur Herstellung von Tofu, Eiweißkonzentraten und/oder Eiweißisolaten.

## Claims

1. Method of production of a soymilk or a soy-based beverage, **characterized in that** said product is obtained by the following processing steps:
a) soaking of the soybeans and
b) grinding the soybeans to form a slurry,
c) separation of the soy slurry into soymilk and okara in a centrifugal field,
d) carrying out of steps a) and b) and preferably c) at temperatures from 0°C to 40°C, which are suitable for obtaining native proteins;
e) and then submitting the soymilk to deodorization, in order to reduce the beany taste.

2. Method of production of a soymilk according to Claim 1, **characterized in that** the soybeans are soaked and ground in steps a) and b) at temperatures from 2°C to 40°C.

3. Method of production of a soymilk according to Claim 1 or 2, **characterized in that** the soybeans are soaked and ground in steps a) and b) at temperatures from 2°C to 20°C.

4. Method of production of a soymilk according to one of the Claims 1 to 3, **characterized in that** the soybeans are soaked in a continuous process in step a).

5. Method of production of a soymilk according to one of the preceding claims, **characterized in that** the soybeans are soaked and ground in steps a) and b) with degassed water and/or ice water.

6. Method according to one of the preceding claims, **characterized in that** the soybeans are soaked for a period of less than 60 min.

7. Method according to one of the preceding claims, **characterized in that** the soybeans are soaked for a period of less than 30 min.

8. Method of production of a soymilk according to one of the preceding claims, **characterized in that** the okara obtained is mixed with water and/or with soymilk.

9. Method of production of a soymilk according to one of the preceding claims, **characterized in that** the okara, mixed with water and or with soymilk, is submitted to further intensive mixing.

10. Method of production of a soymilk according to claim 9, **characterized in that** the intensive mixing is carried out with a colloid mill or an emulsifying apparatus.

11. Method according to one of the preceding claims, **characterized in that** the separation of the soy slurry into soymilk and okara in the centrifugal field, is carried out in particular with a separator and/or a solid-wall helical conveyor centrifuge.

12. Method according to one of the preceding claims, **characterized in that** temperatures below 90°C, in particular below 70°C, preferably below 40°C are maintained throughout the process up to deodorization for the production of a soymilk.

13. Method according to one of the preceding claims, **characterized in that** the deodorization is carried out by a thermal process.

14. Method according to one of the preceding claims, **characterized in that** the deodorization is carried out by a thermal process, in which the beany taste is reduced, maintaining temperatures from 98°C to 103°C preferably under atmospheric pressure.

15. Method according to one of the preceding claims, **characterized in that** the deodorization is carried out by an evaporation process.

16. Method according to one of the preceding claims, **characterized in that** the deodorization is carried out in a dearomatization unit.

17. Method of production of a soymilk according to one of the preceding claims, **characterized in that** heating with live steam is carried out before deodorization.

18. Method of production of a soymilk according to one of the preceding claims, **characterized in that** the heating before deodorization is carried out with live steam suitable for food processing.

19. Method of production of a soymilk according to Claim 18, **characterized in that** the heating with live steam is preceded by preheating by means of a heat exchanger.

20. Method of production of a soymilk according to Claim 19, **characterized in that** preheating is carried out up to 45°C, preferably up to 50°C.

21. Method according to one of the preceding claims, **characterized in that** the heating of the soymilk with live steam is carried out for a period of less than 180 s, preferably less than 120 s and quite especially preferably less than 60 s.

22. Method according to one of the preceding claims, **characterized in that** the heating of the soymilk with live steam is carried out up to a temperature of max. 110° to 140°C, preferably up to 110°C to 130°C and quite especially preferably up to 120°C to 125°C.

23. Method according to one of the preceding claims, **characterized in that** deodorization is carried out by an evaporation process, in which the volumes of steam are at least 1.5 kg steam/kg product.

24. Method of production of a soymilk according to one of the preceding claims, **characterized in that** during deodorization, heating according to claim 22 is carried out first, and then cooling preferably to 85°C.

25. Method of production of a soymilk according to one of the preceding claims, **characterized in that** during deodorization, expansion takes place in the evaporator system to 45°C, preferably to 40°C.

26. Method of production of a soymilk according to one of the preceding claims, **characterized in that** the expansion takes place in a falling-film evaporator.

27. Method according to one of the preceding claims, **characterized in that** the soymilk is submitted to UHT (ultra high temperature) heating.

28. Method according to one of the preceding claims, **characterized in that** the soymilk is submitted to UHT (ultra high temperature) heating, in which it is homogenized in the nonaseptic range.

29. Method according to one of the preceding claims, **characterized in that** during the UHT (ultra high temperature) heating at pressures of more than 200 bar and in subsequent direct UHT heating, a cavitation effect is achieved, which leads to comminution of fat globules.

30. Method according to one of the preceding claims, **characterized in that** single-stage or two-stage homogenization is carried out.

31. Method of production of a soymilk according to one of the preceding claims, **characterized in that** the soymilk obtained is dried by means of a spray tower at product temperatures below the denaturation of soy proteins.

32. Method of production of a soymilk according to Claim 31, **characterized in that** product temperatures below 80°C are used in the spray drying.

33. Use of a soymilk, produced according to one of the preceding claims, for the production of tofu, protein concentrates and/or protein isolates.

## Revendications

1. Procédé d'obtention d'un lait de soja ou d'une boisson à base de soja,
**caractérisé en ce que**
ce produit est obtenu par la mise en oeuvre des étapes suivantes consistant à :
a) détremper des graines de soja, et
b) broyer les graines de soja pour obtenir une pâte,
c) séparer la pâte de soja en lait de soja et okara par centrifugation,
d) mise en oeuvre des étapes a) et b) et de préférence c) à des températures de 0°C à 40°C qui sont adaptées à l'obtention de protéines natives,
e) puis soumettre le lait de soja à une étape de désodorisation pour diminuer le goût des graines.

2. Procédé d'obtention d'un lait de soja conforme à la revendication 1,
**caractérisé en ce que**
lors des étapes a) et b), les graines de soja sont détrempées et broyées à des températures de 2°C à 40°C.

3. Procédé d'obtention d'un lait de soja conforme à la revendication 1 ou 2,
**caractérisé en ce que**
lors des étapes a) et b), les graines de soja sont détrempées et broyées à des températures de 2°C à 20°C.

4. Procédé d'obtention d'un lait de soja conforme à l'une des revendications 1 à 3,
**caractérisé en ce que**
lors de l'étape a), les graines de soja sont détrempées par un procédé continu.

5. Procédé d'obtention d'un lait de soja conforme à l'une des revendications précédentes,
**caractérisé en ce que**
lors des étapes a) et b), les graines de soja sont détrempées et broyées avec de l'eau dégazée et/ou de l'eau glacée.

6. Procédé conforme à l'une des revendications précédentes,
**caractérisé en ce que**
les graines de soja sont détrempées pendant une durée de moins de 60 mn.

7. Procédé conforme à l'une des revendications précédentes,
**caractérisé en ce que**
les graines de soja sont détrempées pendant une durée inférieure à 30 mn.

8. Procédé d'obtention d'un lait de soja conforme à l'une des revendications précédentes,
**caractérisé en ce que**
l'okara obtenu est mélangé à de l'eau et/ou à du lait de soja.

9. Procédé d'obtention d'un lait de soja conforme à l'une des revendications précédentes,
**caractérisé en ce que**
l'okara mélangé à de l'eau ou à du lait de soja est soumis à un mélange intensif ultérieur.

10. Procédé d'obtention d'un lait de soja conforme à la revendication 9,
**caractérisé en ce que**
le mélange intensif est effectué à l'aide d'un condenseur de colloïde ou d'un émulsificateur.

11. Procédé conforme à l'une des revendications précédentes,
**caractérisé en ce que**
la séparation de la pâte de soja et de l'okara par centrifugation est en particulier effectuée à l'aide d'un séparateur et/ou d'une centrifugeuse à vis à bol plein.

12. Procédé conforme à l'une des revendications précédentes,
**caractérisé en ce que**
pendant la totalité du procédé d'obtention d'un lait de soja, jusqu'à l'étape de désodorisation, les températures sont maintenues au-dessous de 90°C, en particulier au-dessous de 70°C et de préférence au-dessous de 40°C.

13. Procédé conforme à l'une des revendications précédentes,
**caractérisé en ce que**
l'étape de désodorisation est effectuée par un processus thermique.

14. Procédé conforme à l'une des revendications précédentes,
**caractérisé en ce que**
l'étape de désodorisation est effectuée par un processus thermique selon lequel le goût de graines est diminué, de préférence des températures de 98°C à 103°C étant maintenues sous pression atmosphérique.

15. Procédé conforme à l'une des revendications précédentes,
**caractérisé en ce que**
l'étape de désodorisation est effectuée par un processus d'évaporation.

16. Procédé conforme à l'une des revendications précédentes,
**caractérisé en ce que**
l'étape de désodorisation est effectuée au moyen d'une installation de désaromatisation.

17. Procédé d'obtention d'un lait de soja conforme à l'une des revendications précédentes,
**caractérisé en ce qu'**
un chauffage par de la vapeur directe est effectué avant le désodorisation.

18. Procédé d'obtention d'un lait de soja conforme à l'une des revendications précédentes,
**caractérisé en ce que**
le chauffage avant désodorisation est effectué avec de la vapeur directe adaptée aux aliments.

19. Procédé d'obtention d'un lait de soja conforme à la revendication 18,
**caractérisé en ce qu'**
avant le chauffage avec de la vapeur directe, un préchauffage est effectué par l'intermédiaire d'un échangeur de chaleur.

20. Procédé d'obtention d'un lait de soja conforme à la revendication 19,
**caractérisé en ce que**
le préchauffage est effectué à une température allant jusqu'à 45°C, de préférence jusqu'à 50°C.

21. Procédé conforme à l'une des revendications précédentes,
**caractérisé en ce que**
le chauffage du lait de soja avec de la vapeur directe est effectué pendant une durée de moins de 180 sec, de préférence de moins de 120 sec et de façon particulièrement préférentielle de moins de 60 sec.

22. Procédé conforme à l'une des revendications précédentes,
**caractérisé en ce que**
le chauffage du lait de soja avec de la vapeur directe est effectué à une température allant jusqu'à au maximum de 110° à 140°C, de préférence de 110°C à 130°C et de façon particulièrement préférentielle, de 120°C à 125°C.

23. Procédé conforme à l'une des revendications précédentes,
**caractérisé en ce que**
l'étape de désodorisation est effectuée par un processus d'évaporation selon lequel le volume de vapeur est inférieur à 1,5 Kg de vapeur/kg de produit.

24. Procédé d'obtention d'un lait de soja conforme à l'une des revendications précédentes,
**caractérisé en ce que**
lors de l'étape de désodorisation, on effectue tout d'abord un chauffage conforme à la revendication 22 puis un refroidissement jusqu'à de préférence 85°C.

25. Procédé d'obtention d'un lait de soja conforme à l'une des revendications précédentes,
**caractérisé en ce que**
lors de l'étape de désodorisation, on effectue une détente dans le système d'évaporation jusqu'à 45°C, de préférence jusqu'à 40°C.

26. Procédé d'obtention d'un lait de soja conforme à l'une des revendications précédentes,
**caractérisé en ce que**
la détente est effectuée dans un évaporateur à tirage par en bas.

27. Procédé conforme à l'une des revendications précédentes,
**caractérisé en ce que**
le lait de soja est soumis à un chauffage UHT (chauffage à ultra haute température).

28. Procédé conforme à l'une des revendications précédentes,
**caractérisé en ce que**
le lait de soja est soumis à un chauffage UHT (chauffage à ultra haute température) selon lequel il est homogénéisé dans une plage non aseptique.

29. Procédé conforme à l'une des revendications précédentes,
**caractérisé en ce que**
lors du chauffage UHT (chauffage à ultra haute température) à des pressions supérieures à 200 bars d'un chauffage UHT direct, on obtient un effet de cavitation qui conduit à une fragmentation des globules de matières grasses.

30. Procédé conforme à l'une des revendications précédentes,
**caractérisé en ce qu'**
on effectue homogénéisation en une ou deux étapes.

31. Procédé d'obtention d'un lait de soja conforme à l'une des revendications précédentes,
**caractérisé en ce que**
le lait de soja obtenu est séché au moyen d'une tour de pulvérisation à des températures de produit situées en dessous de la température de dénaturation des protéines de soja.

32. Procédé d'obtention d'un lait de soja conforme à la revendication 31,
**caractérisé en ce que**
lors du séchage par pulvérisation, on utilise des températures de produit inférieures à 80°C.

33. Utilisation d'un lait de soja obtenu par la mise en oeuvre d'un procédé conforme aux revendications précédentes pour l'obtention de tofu, de concentré de protéines ou d'isolats de protéines.
